# EUROPEAN PATENT APPLICATION

(11) **EP 1 977 651 A1**
(43) Date of publication of application: **08.10.2008**
(21) Application number: 07007267.3
(22) Date of filing: 06.04.2007
(51) Int. Cl.: A23F 5/12, A23F 3/32

(54) **Method for preparing a beverage and a tablet to be used with said method**

(71) Applicant: Sara Lee/DE N.V., 3532 AA Utrecht (NL)
(72) Inventor: van Bergen, Cornelis, 3992 RB Houten (NL)
(74) Representative: van Loon, C.J.J.

(57) **Abstract**

A method for preparing a beverage suitable for consumption, such as coffee, the method comprising:
- providing a coffee starting material in a holder
- supplying a liquid to the coffee starting material in order to extract coffee extracts from the coffee starting material
- collecting the coffee formed from the liquid and coffee extracts in a collecting element provided downstream of the holder,
characterized in that
the coffee starting material in the holder is provided in the form of at least one tablet, while the tablet is designed for gradually disintegrating during supply of the liquid to the tablet. The invention further relates to a tablet preferably to be used in an above-described method, wherein the tablet is manufactured from an amount of compacted, roasted, ground coffee beans or from an amount of compacted tea leaf cuttings.

## Description

The invention relates to a method for preparing a beverage suitable for consumption, wherein a beverage starting material is provided and is brought into a holder, wherein a liquid is supplied to the beverage starting material in the holder and wherein, by means of extraction, beverage extracts are extracted from the beverage starting material and, together with the liquid, form the beverage.

Such a method for preparing a beverage suitable for consumption, such as coffee, is known. With the known method for preparing beverage, such as, for instance, coffee, a filter is typically used, in which an amount of loose starting material, such as grindings of roasted coffee beans, are placed. The amount of coffee grindings depends on the amount of coffee to be prepared and the desired strength thereof. When hot water is supplied to the coffee grindings in the filter, and this runs through the ground coffee, coffee extracts are extracted from the coffee grindings. As a result, the coffee brew suitable for consumption is formed. The coffee brew leaves the filter at a lowest side and is collected in a jug, a mug or the like.

A drawback of the known method is that the dosing of the coffee grindings, when this is brought into the holder, is done through scooping. Working with spoons often leads to spilling on the counter or such worktop. It is, moreover, easy to put the wrong number of scoops of coffee grindings into the holder, so that too weak or too strong coffee is obtained.

Another drawback of the known method is that the coffee brew can contain substances that are disadvantageous for the taste, which are released from the coffee grindings through over-extraction during the extraction process. An example of such a disadvantageous substance is chlorogenic acid. Chlorogenic acid can give the prepared coffee a bitter taste and can also have an irritating effect on the gastric and intestinal walls. Other harmful substances are maleic acid, mailic acid, chinic acid, caffeine and trigonelline.

The invention is based on the insight that when loose coffee grindings is used in the filter for preparing the coffee beverage, the amount of soluble dry matter in the coffee grindings is taken up in the coffee brew relatively rapidly. This means that the desired coffee extracts are extracted relatively rapidly from the loose coffee grindings during through-flow of the hot water through the loose coffee grindings. As a result, over-extraction takes place. Research has shown that when preparing coffee, when loose coffee grindings are used in a filter under standard conditions, the first 50 vol.% of the coffee brew contains already approximately 90 - 95% of the soluble dry matter from the coffee grindings. During the preparation of the last 50 vol.% of the coffee brew, the last percents of the soluble dry matter are extracted. With it, also, a part of the earlier mentioned undesired disadvantageous substances is extracted from the coffee grindings.

The object of the present invention is to provide a method for preparing a beverage suitable for consumption, such as coffee, which does not have the above-mentioned drawbacks. The object of the invention is, more particularly, to provide a method for preparing a beverage suitable for consumption, such as coffee, wherein during the extraction process, as few of the undesired, disadvantageous substances as possible are released from the starting material.

To this end, the invention provides a method according to the type mentioned in the opening paragraph, which is characterized in that the beverage starting material which is brought into the holder has a tablet-shape design such that, during the extraction process, the beverage starting material is gradually exposed to the liquid.

The invention also provides a tablet for use in a method according to the invention, wherein the tablet is provided with a beverage starting material, while the tablet is designed such that upon supply of liquid in an extraction process, the beverage starting material is gradually exposed to the liquid.

The advantage of the use of tablets is that dosing thereof in the holder is simple. Per cup of beverage, such as for instance coffee, for instance one tablet can be put into the holder. Here, the risk of spilling beverage starting material on the counter or the worktop is reduced to a minimum.

Through the use of a tablet, designed such that, during the extraction process the beverage starting material is gradually exposed to the liquid, dispensing the soluble dry matter proceeds more gradually. Dispensing the dry matter takes place during the entire through-flow cycle of the water through the starting material. As a result, the release of these disadvantageous substances, which are undesirable to the taste, from the starting material, is reduced, and they do not end up in the eventually prepared beverage, or to at least a lesser extent.

When the tablet contains coffee starting material, with the method according to the invention, a milder coffee is obtained which also has a less bitter taste than a coffee prepared by means of loose coffee grindings.

In one embodiment of the method, the gradual exposure of the beverage starting material can be effected in that the tablet gradually disintegrates during the contact with the liquid.

This gradual disintegration can, for instance, be effected in that the tablet is provided by bringing the beverage starting material in a ground or cut form, and by compacting these grindings or cuttings. Compacting the grindings or cuttings should then be such that when the tablet is in contact with the liquid, it should not disintegrate immediately but gradually.

Here, the grindings can be manufactured from roasted coffee beans, while, when a drip filter coffee machine is utilized, a milder coffee brew is obtained than when a corresponding amount of coffee grindinds is utilized in this same drip filter coffee machine.

Preferably, such a tablet does not contain additional substances, so that no taste affecting substances are present.

With a tablet manufactured from such grindings, coffee can be prepared. Use can then be made of a standard, commercially available drip filter coffee machine. Such a drip filter coffee machine is, for instance, a readily commercially available filter coffee machine with common brewing conditions, therefore, times and temperatures that are usual when preparing coffee from loose coffee grindings. Such an apparatus has a flow rate of, for instance, 0.5 - 10 ml coffee per second. Here, in an advantageous manner, the coffee tablet can be brought into a filter placed in a filter holder, whereupon hot water can be poured over. The method according to the invention can therefore be advantageously used in the existing standard coffee machine with filter holder present in almost any household. Without spilling coffee grindings on the counter or worktop, the coffee tablet is simply placed into the filter which is in the filter holder, while the dosing of the amount of coffee is particularly simple, for instance in that the number of tablets corresponds to the desired number of cups of coffee. When, with the same apparatus, instead of loose coffee grindings, an amount of coffee tablets corresponding to the amount of coffee grindings is placed in the filter, surprisingly, milder coffee is obtained than when preparing coffee with loose coffee grindings.

In one embodiment, the degree of compaction of the coffee grindings can be such that the time duration required for gradual disintegration of the tablet substantially corresponds to the extraction time required for preparing an amount of coffee corresponding to one tablet. Thus, it is effected that during the entire extraction time, fresh coffee grindings are exposed to the water. Thus, over-extraction and, hence, release of undesired substances is limited as much as possible.

According to an exemplary embodiment, the amount of beverage starting material in one tablet can correspond to a standard unit of beverage of the desired strength to be produced therewith, for instance, the amount of beverage starting material in one tablet corresponds to one cup of beverage or one jug of beverage of the desired strength.

A standard unit of coffee to be prepared can, for instance, be a cup of coffee, a pot of coffee or a different unit with a specific content. With a particular weight of a tablet, for instance, two tablets can be placed in the holder for obtaining a cup of coffee with a particular strength. For, presently, preparing a pot of coffee for ten cups, twenty tablets can be placed in the holder. It is clear that the number of tablets to be used depends on the desired strength of the coffee, the weight of the compacted coffee starting material per tablet and/or the amount of water that is fed through the filter of the coffee machine.

According to a further elaboration of the invention, for preparing one cup of coffee, the at least one tablet can be manufactured from an amount of coffee grindings of 2 - 15 g, more particularly from an amount of coffee grindings of 6 - 8 g. With such an amount of compacted coffee grindings per tablet, an optimal course of the extraction of the desired coffee components from the dry matter is obtained.

In an alternative further elaboration of the method, the cuttings can be manufactured from tea leaves.

With a tablet manufactured with such cuttings, through extraction, tea can be prepared.

In one embodiment of the method, the starting material can be encapsulated in two or more capsules gradually soluble in the liquid.

Upon contact with water, the first capsule dissolves and a first amount of beverage starting material is released, and then the second capsule dissolves and a second amount of beverage starting material is released.

Here, a first capsule can be manufactured from a material that dissolves relatively rapidly in the liquid, and a second capsule can be manufactured from a material that, with respect to the first capsule, dissolves relatively slowly in the liquid. The capsules could, for instance, be manufactured from a material containing sugar or milk powder or a coffee creamer. Instead of, or in combination with different materials, also, with differences in capsule wall thickness the moment of exposure of the starting material present in the capsule can be varied.

With such an elaboration, the two capsules can, for instance, be located side by side and be interconnected.

However, it is also possible that the tablet is provided with an outer capsule which surrounds a first amount of beverage starting material and an inner capsule, while the inner capsule surrounds a second amount of beverage starting material. Before the second amount of beverage starting material is released, first, the outer capsule must be dissolved and then also the inner capsule. As a result thereof, the beverage starting material is gradually exposed to the liquid, more particularly the water. The advantage is that through the solubility of the capsules, it can be accurately regulated at what moment the various amounts of the average starting material included in the tablet are released. Thus, the taste of the beverage can be optimally regulated.

According to a further elaboration of the invention, in addition to beverage starting material, the tablet can also contain an addition. The addition may be accommodated in the capsule which surrounds the beverage starting material. However, it is also possible that the addition is embedded in the beverage starting material. The addition can, for instance, be sugar. An addition in the form of milk powder, or a similar substance forming coffee creamer when in contact with water, is possible too. Other flavours such as cinnamon, mocha and the like as addition belong to the possibilities.

The invention also relates to the use of a tablet according to the invention, for preparing, by means of extraction, more particularly filter extraction, an amount of beverage suitable for consumption.

Further elaborations of the invention are described in the subclaims and will be elucidated in the following, with reference to the Figures. In the Figures:
Fig. 1 shows a perspective view of a tablet according to the invention;
Fig. 2 shows a cross-section of the embodiment represented in Fig. 1;
Fig. 3 shows a second embodiment of a compacted tablet in cross-section;
Fig. 4 shows a first embodiment of a tablet with two capsules;
Fig. 5 shows a second embodiment of a tablet with two capsules; and
Fig. 6 shows a diagram in which the course of extracting dry matter from loose coffee grindings according to the state of the art and the course of extracting dry matter from a coffee tablet according to the invention are represented.

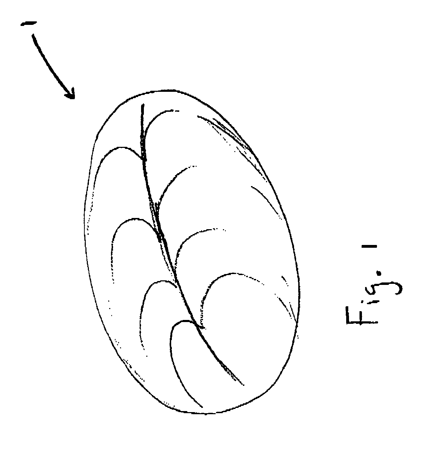

Fig. 1 shows a perspective view of a tablet, containing beverage starting material, such as, for instance, coffee grindings or tea cuttings. In the exemplary embodiment shown, the tablet has the exterior appearance of a large coffee bean. However, this is done only for aesthetic reasons and has no technical effect.

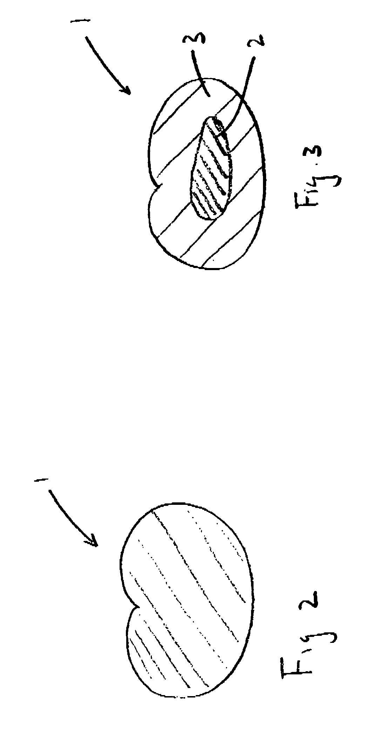

Fig. 2 shows a cross-section of the tablet represented in Fig. 1. It is a tablet 1 which is manufactured by compacting coffee grindings. The tablet contains no additions other than the coffee grindings itself. The degree of compaction is determinative of the speed at which the tablet 1 disintegrates when it is brought into contact with hot water. Preferably, the gradual disintegration takes approximately as long as the extraction process for preparing the beverage, so that, during the entire extraction process, each time, fresh coffee grindings are exposed to the water. Thus, the release of undesired substances caused by over-extraction is reduced.

In Fig. 3, a variant is shown wherein the tablet 1 is provided with a core 2 of coffee grindings compacted more solidly than a peel 3 of coffee grindings surrounding the core 2 that has been compacted less solidly. As a result thereof, a first amount of beverage starting material will be exposed to the water relatively rapidly, while the second amount of beverage starting material from the core is only exposed later. Thus, the exposure profile of the coffee starting material can be varied, so that a greater variation of desired flavours can be obtained. Naturally, variants thereon are conceivable.

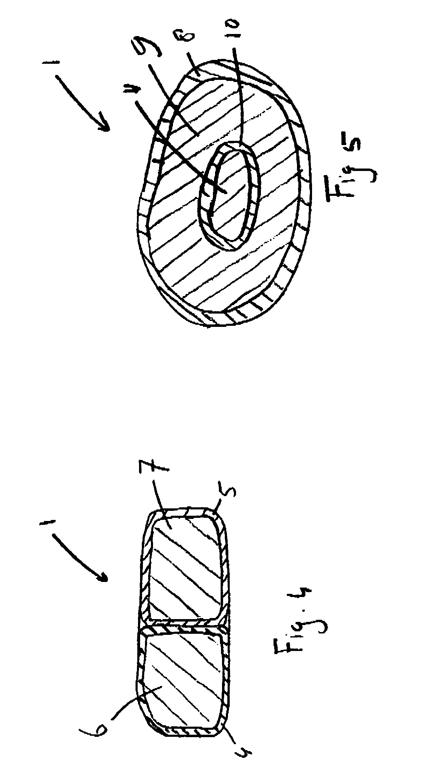

Fig. 4 shows a variant of the tablet 1, which is provided with two capsules 4, 5 each gradually soluble in water. The capsule 4 dissolves more rapidly than the capsule 5, so that the starting material 6 in the capsule 4 is released more rapidly than the starting material 7 in capsule 5. The two capsules 4 and 5 are disposed side by side and are interconnected. The beverage starting material 6, 7 can, for instance, be coffee grindings or tea cuttings.

Fig. 5 shows a variant wherein the tablet 1 is provided with an outer capsule 8 which surrounds a first amount of beverage starting material 9 and an inner capsule 10. In turn, the inner capsule 10 surrounds a second amount of starting material 11. The two capsules 8 and 10 can be manufactured from the same material or from different materials. Also, the capsule wall thicknesses can be different from each other. For this exemplary embodiment, it applies that the beverage starting material 9, 11 can be, for instance, coffee grindings or tea cuttings.

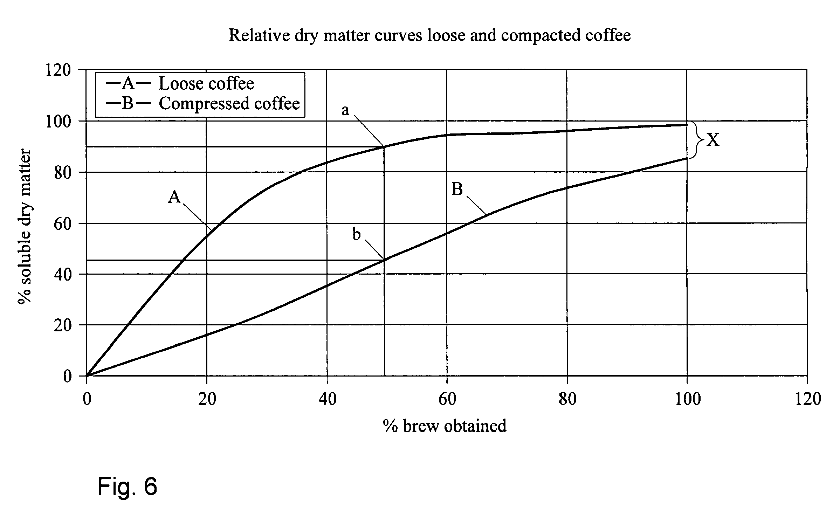

In Fig. 6, curve A shows the course of the extraction of soluble components from the dry matter of the coffee starting material when coffee is prepared from loose coffee grindings. To this end, the loose coffee grindings are placed in a holder, to which water is supplied, preferably at a temperature of approximately 85°C. The easily soluble coffee components are extracted from the coffee grindings first. Approximately 90- 95% of the dry matter is used for preparing approximately 50 vol.% of the coffee (see point a in Fig. 1). During the preparation of the remaining 50 vol.% of the coffee, the remainder of the dry matter is used and also, over-extraction takes place. As a result, also, disadvantageous undesired components from the coffee starting material end up in the prepared coffee. This causes a bitter taste of the coffee. Such disadvantageous components are, for instance, chlorogenic acid, maleic acid, mailic acid, chinic acid, caffeine and/or trigonelline.

Curve B in Fig. 6 indicates the course of the extraction process of coffee components when coffee is prepared with the aid of tablets according to the invention, more particularly with tablets as shown in Figs. 1 and 2, i.e. a tablet manufactured from homogeneously compacted coffee grindings. At least one tablet per unit of coffee to be prepared is placed in the filter of the coffee filter machine. Then, an amount of hot water is supplied to the tablets, so that the tablets gradually disintegrate. Due to the disintegration of the tablets during the brewing process of the coffee, the coffee extracts are gradually released from the coffee starting material. The release of the extracts exhibits a virtually linear connection. As a result, after the preparation of approximately 50 vol.% of the coffee, also approximately half of the dry matter of the coffee grindings is used (see point b in Fig. 1). For preparing the next 50 vol.% of the coffee, the second half of the dry matter present is used. Consequently, the risk of over-extraction is much smaller than when loose coffee grindings is used. Depending on the degree of compaction of the ground coffee in the tablet, it is even possible that not all dry matter is used during the preparation of the coffee. As can be seen in Fig. 1, when 100 vol.% of coffee is prepared, curve B is x percent below the level of the use of 100% dry matter. The fact that not all dry matter is used appears to be of no noticeable influence to the taste of the prepared coffee.

It is noted that when tablets are used wherein the ground coffee beans are compacted at a greater pressure, the directional coefficient of curve B becomes smaller. As a result, x will become greater at 100 vol.% of prepared coffee brew.

It will be clear that the invention is not limited to the exemplary embodiment described, but that various modifications are possible within the framework of the invention, as defined by the claims. For instance, the tablet can have various forms, the coarseness of the grind of the coffee beans can vary as well as the variety of coffee used.

## Claims

1. A method for preparing a beverage suitable for consumption, wherein a beverage starting material is provided and is brought into a holder, wherein a liquid is supplied to the beverage starting material in the holder and wherein, by means of extraction, beverage extracts are extracted from the beverage starting material and, together with the liquid, form the beverage, **characterized in that** the beverage starting material which is brought into the holder has a tablet-shaped design such that during the extraction process, the beverage starting material is gradually exposed to the liquid.

2. A method according to claim 1, wherein the gradual exposure of the beverage starting material is effected in that the tablet gradually disintegrates during the contact with the liquid.

3. A method according to claim 1, wherein the tablet is provided by bringing the beverage starting material into a ground or cut form, and by compacting these grindings or cuttings.

4. A method according to claim 3, wherein the grindings are manufactured from roasted coffee beans, while, when a drip filter coffee machine is utilized, a milder coffee brew is obtained than when a corresponding amount of coffee grindings is utilized in the same drip filter coffee machine.

5. A method according to claim 3, wherein the cuttings are manufactured from tea leaves.

6. A method according to claim 1, wherein the starting material is encapsulated in two or more capsules gradually soluble in the liquid.

7. A method according to claim 6, wherein a first capsule is manufactured from a material that dissolves relatively rapidly in the liquid and wherein a second capsule is manufactured from a material that, with respect to the first capsule, dissolves relatively slowly in the liquid.

8. A method according to claim 6, provided with an outer capsule which surrounds a first amount of beverage starting material and an inner capsule, while the inner capsule surrounds a second amount of beverage starting material.

9. A method according to claim 3, wherein the degree of compaction of the coffee grindings is such that the time duration required for gradual disintegration of the tablet substantially corresponds to the extraction time required for preparing an amount of coffee corresponding to one tablet.

10. A method according to any one of the preceding claims, wherein the amount of beverage starting material in one tablet corresponds to a standard unit of beverage of the desired strength to be produced therewith, for instance, the amount of beverage starting material in a tablet corresponds to one cup of beverage or one jug of beverage of the desired strength.

11. A method according to any one of the preceding claims, wherein the at least one tablet is manufactured from an amount of coffee grindings of 2 - 15 g, more particularly from an amount of coffee grindings of 6 - 8 gram.

12. A method according to any one of the preceding claims, wherein the method is carried out in a filter coffee apparatus designed for preparing coffee.

13. A method according to any one of the preceding claims, wherein the holder is a filter placed in a filter holder and the extraction process is a filter extraction process.

14. A tablet for use in a method according to any one of the preceding claims, wherein the tablet is provided with a beverage starting material, the tablet being designed such that upon supply of liquid in an extraction process, the beverage starting material is gradually exposed to the liquid.

15. A tablet according to claim 14, wherein the tablet comprises compacted grindings or cuttings of the starting material, while, in use, the compacted grindings or cuttings gradually disintegrate in contact with the liquid.

16. A tablet according to claim 14, wherein the beverage starting material are grindings of roasted coffee.

17. A tablet according to claim 16, wherein this tablet contains 1 - 15 grams of coffee grindings, more particularly 6 - 8 grams.

18. A tablet according to claim 14, wherein the beverage starting material are cuttings of tea leaves.

19. A tablet according to claim 14, wherein the tablet is provided with at least two capsules, each containing beverage starting material, while the capsules are gradually soluble in the liquid.

20. A tablet according to claim 19, wherein a first capsule is manufactured from a material that dissolves relatively rapidly in the liquid and wherein a second capsule is manufactured from a material, which, with respect to the first capsule, dissolves relatively slowly in the liquid.

21. A tablet according to claim 19, wherein the tablet is provided with an outer capsule that surrounds a first amount of beverage starting material and an inner capsule, while the inner capsule surrounds a second amount of beverage starting material.

22. A tablet according to any one of claims 14 - 21, wherein the tablet, in addition to the beverage starting material, also comprises an addition.

23. A tablet according to claim 22, wherein the addition forms part of a capsule that surrounds the beverage starting material.

24. A tablet according to claim 22 or 23, **characterized in that** the addition is sugar.

25. A tablet according to claim 22 or 23, **characterized in that** the addition is milk powder or a similar substance forming coffee creamer when in contact with water.

26. Use of a tablet according to any one of claims 14 - 25, for preparing, by means of extraction, more particularly filter extraction, an amount of beverage suitable for consumption.
